Europäisches Patentamt

European Patent Office

Office européen des brevets

(19)

(11) Veröffentlichungsnummer: **0 475 155 A1**

## (12) EUROPÄISCHE PATENTANMELDUNG

(21) Anmeldenummer: **91114135.6**

(22) Anmeldetag: **23.08.91**

(51) Int. Cl.⁵: **A01F 15/14**, A01D 59/00

(30) Priorität: **12.09.90 DD 343965**

(43) Veröffentlichungstag der Anmeldung:
**18.03.92 Patentblatt 92/12**

(84) Benannte Vertragsstaaten:
**BE DE DK FR GB IT SE**

(71) Anmelder: **Fortschritt Erntemaschinen GmbH**
**Berghausstrasse 1-3**
**O-8355 Neustadt(DE)**

(72) Erfinder: **Prellwitz, Hubert**
**Mittelweg 28**
**O-8351 Polenz(DE)**
Erfinder: **Neubert, Lutz**
**Hauptstrasse 2**
**O-8351 Langenwolmsdorf(DE)**

(74) Vertreter: **Müller, Lutz**
**Patentassessor, Fortschritt Erntemaschinen**
**GbmH, Berghausstrasse 1-3**
**O-8355 Neustadt(DE)**

(54) **Antriebsvorrichtung für Bindeeinrichtungen an Ballenpressen.**

(57) Presse, Geradschubkolbenpresse, Großballen, Bindevorrichtung, Nadel, Wirkprinzip, unterbrechen, Schutzvorrichtung, Verschleißminderung.

Die Erfindung bezieht sich auf eine Antriebsvorrichtung für Bindeeinrichtungen an Ballenpressen, insbesondere auf die Art und Weise, wie eine Kollision zwischen Bindenadel und Preßkolben verhindert werden kann.

Ziel ist es, ohne materialintensive Überdimensionierung der Nadelrückholeinrichtug oder notwendige Kombination von Kolbenstopp und Nadelrückholeinrichtung Havarien bei plötzlicher Antriebsunterbrechung zu unterbinden.

Die Aufgabe besteht darin, die Antriebsvorrichtung so zu gestalten, daß ein Stehenbleiben der Nadelschwinge im oberen Totpunkt oder seinem unmittelbaren Bereich ausgeschlossen ist, jedoch der Überlastschutz und eine sichere Funktion der Nadelrückholeinrichtung gewährleistet wird. Gelöst wird die Aufgabe dadurch, daß der Mitnehmer (5) im Schaltrad (1) in einem Lager (4) schwenkbar angeordnet ist und durch eine in oder außerhalb der Schwenkachse angebrachten Überlastsicherung (6) im Eingriffsbereich der Schaltklinke (8) gehalten wird und im Überlastungsfall im oberen Totpunkt "T" der Bindenadel (12) und seiner unmittelbaren Umgebung der Mitnehmer (5) mit einer Rolle (17) auf einer Führungsbahn (16) im Eingriff mit der Schaltklinke (8) zwangsgeführt wird.

## Anwendungsgebiet der Erfindung

Die Erfindung betrifft eine Antriebsvorrichtung für Bindeeinrichtungen an Ballenpressen, insbesondere an Quaderballenpressen, in denen Erntegüter wie Heu, Stroh oder dgl. zu hochverdichteten Ballen gepreßt werden.

## Charakteristik bekannter technischer Lösungen

Einrichtungen zum Schutz der Bindenadeln, falls der im allgemeinen zwischen Kolben- und Nadelbewegung bestehende Gleichlauf gestört sein sollte und sich die Nadeln unvorhergesehen während des nächsten Preßhubes des Preßkolbens noch im Preßkanal befinden sollten, sind in verschiedenen Ausführungen bekannt. Zu ihnen gehören Nadelrückholeinrichtungen, Kolbenstoppeinrichtungen oder eine Kombination beider Einrichtungen. Um die komplizierten Baugruppen der Bindeeinrichtung vor einer Zerstörung zu schützen, ist im Antrieb der Bindeeinrichtung eine Überlastsicherung, meist als Scherschraube oder Scherstift vorgesehen. Diese Scherstiftsicherungen haben den Nachteil, daß aus unterschiedlichsten Gründen, wie Überlastung des Antriebes, dauernde Kerbwirkung und damit Verschleißerscheinungen, ein häufiges, teilweise ungewolltes Abscheren des Scherstiftes erfolgt und dabei die Nadeln noch oder schon im Preßkanal sind und damit eine Havarie mit dem Preßkolben bzw. der von ihm herangebrachten Erntegutschicht bei seinem nächsten Hub eintreten kann.

Aus der Bedienanleitung zur Großballenpresse D 2000 der Firma Ford New Holland ist eine Vorrichtung zum Schutz der Nadeln im Preßkanal bekannt, bei der die vom Hauptgetriebe der Presse angetriebenen Kurbeltriebe der Kolbenkurbel und der Sicherheitseinrichtung, die, mit dem Preßkolben bzw. mit der Nadelschwinge verbunden, jeweils eine dem Preßkolben oder der Nadelschwinge direkt zugeordnete Bewegung vollführen und im Falle des Stehenbleibens der Nadeln im Preßkanal aufgrund der Unterbrechung des Antriebes der Bindeeinrichtung, die Nadeln aus dem Preßkanal ziehen. Dazu ist eine in die Nadelschwinge eingehangene Stange vorgesehen, die einen Hebel synchron zur Auf- und Abwärtsbewegung der Nadelschwinge im Moment des Bindevorganges in den Bewegungsbereich des rotierenden Pleuelstangenkopfes hinein- und hinausschwenkt. Bleibt jedoch die Bindeeinrichtung im Bereich des oberen Totpunktes der Nadeln stehen, was durch das Einsetzen des Knüpfprozesses zu diesem Zeitpunkt und die damit erhöhten Antriebsbelastungen mit größter Wahrscheinlichkeit in der Mehrzahl der Havariefälle eintritt, oder wird der Antrieb der Bindeeinrichtung in diesem Bereich oder einer anderen für das Herausziehen der Nadeln ungünstigen Lage unterbrochen, bewirkt der Hebelarm ein schlagartiges Abbremsen des Preßkolbens über das Hauptgetriebe durch das Ansprechen der Überlastsicherung im Hauptantrieb der Maschine.

Der Nachteil der Kolbenstoppvorrichtung mit Nadelrückholeinrichtung besteht darin, daß der Antrieb der Nadelschwinge von der Bindeeinrichtung ebenfalls als Kurbeltrieb ausgeführt ist und in der Nähe des oberen Totpunktes der Nadeln, der gleichfalls oberer Totpunkt des Kurbeltriebes ist, bedingt durch das Einsetzen des Bindeprozesses, der Antrieb häufig unterbrochen wird, so daß die Nadelrückholeinrichtung gegen einen in Totpunktlage bzw. in der Nähe derselben befindlichen Kurbeltrieb wirkt. Dies wiederum erfordert eine entsprechend verstärkte Ausgestaltung des Nadelgetriebes und der Nadelrückholeinrichtung oder die Kombination mit einem Kolbenstopp, weil diese Übertragungselemente die maximal übertragbare Belastung am Hauptantrieb bis zum Ansprechen der Überlastsicherung aushalten müssen.

Auch die Kolbenstoppeinrichtungen selbst sind mit Nachteilen behaftet, da der Kolben bei den meisten Ausführungen an ein und derselben Stelle in seiner Bewegung schlagartig abgebremst wird und alle Übertragungselemente bis hin zu der vor dem Hauptgetriebe liegenden Überlastsicherung dieser schlagartigen Belastung entsprechend ausgeführt werden müssen. Außerdem werden dabei im Hauptgetriebe immer die gleichen Zähne schlagartig beansprucht, was zu erhöhtem Verschleiß führt.

## Ziel der Erfindung

Die Erfindung hat das Ziel, eine Antriebsvorrichtung für Bindeeinrichtungen an Ballenpressen zu schaffen, die in Aufsammelpressen mit großen Durchsatzleistungen die Bedingungen für eine günstigere und sichere Gestaltung von Einrichtungen, welche eine Kollission von Preßkolben und Bindenadel verhindern, erfüllt.

## Darlegung des Wesens der Erfindung

Der Erfindung liegt die Aufgabe zugrunde, eine Antriebsvorrichtung für die Bindeeinrichtung an Ballenpressen so zu gestalten, daß ein Stehenbleiben der Nadelschwinge im Überlastungsfall im oberen Totpunkt oder seiner unmittelbaren Nähe verhindert wird, dabei jedoch außerhalb dieses Bereiches der Überlastschutz und damit die Voraussetzungen für eine sichere Funktion der Nadelrückholeinrichtung gewährleistet wird.

Erfindungsgemäß wird das dadurch gelöst, daß der Mitnehmer im Schaltrad in einem Lager schwenkbar angeordnet ist und durch eine in oder außerhalb der Schwenkachse angebrachten form- oder kraftschlüssigen Sicherung gegen Überlastung im Eingriffsbereich der Schaltklinke gehalten wird und im Überlastungsfall im oberen Totpunkt der Bindenadeln und seiner unmittelbaren Umgebung der Mitnehmer mit einer Rolle auf einer einstellbaren Führungsbahn im Eingriff mit der Schaltklinke zwangsgeführt wird.

Im Falle einer Havarie spricht die Überlastsicherung, die als Scherstift oder Scherschraube ausgebildet sein kann, an und der Mitnehmer wird von der Schaltklinke aus ihrem Eingriffsbereich gedrückt. Befindet sich jedoch die Schaltkurbel des Nadelabtriebes im Moment der Antriebsunterbrechung gerade im oberen Totpunkt oder seiner unmittelbaren Umgebung, so verhindert die Führungsbahn eine sofortige Unterbrechung des Antriebes bis die Bindenadeln den oberen Totpunkt überschritten haben. Dazu ist die Lage der Führungsbahn in geringem Abstand zur von einer beliebigen Oberfläche des Mitnehmers in der Ausgangslage beschriebenen Kreisbahn zugeordnet und die Länge und Kurvenform der Fuhrungsbahn mit dem gewählten Bereich um den oberen Totpunkt der Bindenadeln, über den die Zwangsführung der Schaltkurbel erfolgen soll, übereinstimmend ausgeführt. Dies ist zulässig, da die Bindenadeln im Bereich des oberen Totpunktes nur einen geringen Weg zurücklegen und die Bedingungen für eine Überlastung des Bindeantriebes, die von seiten der Bindenadeln-Nadelschwinge hervorgerufen wird, wie z.B. verstopfter Kolben, Fehleinstellung der Nadeln, Fehleinstellung der Nadeln-Kolben u.a. nicht mehr gegeben sind.

Ist der Weg der Zwangsführung und damit die kritische Lage der Bindenadeln überwunden, schwenkt der Mitnehmer aus dem Eingriffsbereich der Schaltklinke, wobei das Schaltrad mit einer, die Schwenkbewegung des Mitnehmers auf das Verlassen des Schaltklinkeneingriffsbereiches begrenzenden Aussparung versehen ist. Die dadurch freigegebene Klinkenrolle der Schaltklinke ist so breit ausgeführt, um im Mitnehmerbereich Mitnehmer und Rollenbahn des Schaltrades zu überdecken und sowohl vom Mitnehmer erfaßt als auch bei ausgeschwenktem Mitnehmer im Mitnehmerbereich von der Rollenbähn des Schaltrades in ihrer Lage gehalten wird. Durch eine derartige Gestaltung der Antriebsvorrichtung ist der Vorteil zu verzeichnen, daß materialintensive Überdimensionierungen des Nadelgetriebes und der Nadelrückholeinrichtung oder eine Kombination von Kolbenstopp und Nadelrückholeinrichtung nicht mehr erforderlich werden.

Ausführungsbeispiel

Die Erfindung soll nachstehend an einem Ausführungsbeispiel näher erläutert werden. Die dazugehörige Zeichnung zeigt eine Seitenansicht der Antriebsvorrichtung im Bereich des oberen Totpunktes.

Im Antrieb der Bindeeinrichtung einer nicht näher dargestellten Ballenpresse ist ein Schaltrad 1 auf einer Welle 2 gelagert und über eine Kette 3 angetrieben, so daß sich das Schaltrad 1 bei laufender Ballenpresse ständig dreht. Mit dem Schaltrad 1 ist durch das Lager 4 ein Mitnehmer 5 schwenkbar verbunden und durch eine Überlastsicherung 6 in Form einer Scherschraube oder eines Scherstiftes lagefixiert. Die Mitnehmerbewegung ist der Bewegung des Preßkolbens fest zugeordnet. Auf der Welle 2 ist die Schaltkurbel 7 befestigt, an deren einem Ende eine Schaltklinke 8 mit einem Schwenklager 9 drehbeweglich angeschlossen ist, die mit einer nicht dargestellten Schalteinrichtung in Wirkverbindung steht. Am anderen Ende der Schaltkurbel 7 ist eine Kurbelstange 10 angelenkt, die mit der Nadelschwinge 11, die die Bindenadel 12 aufnimmt, verbunden ist. Hat der gepreßte Ballen die gewünschte Länge erreicht, gibt die Schalteinrichtung die Schaltklinke 8 frei. Diese legt sich mit ihrer Klinkenrolle 13 an die Rollenbahn 14 des Schaltrades 1 und wird vom Mitnehmer 5 erfaßt und die Bindeeinrichtung wird angetrieben. Tritt in der Bindeeinrichtung ein Überlastungsfall ein, bricht die Scherschraube oder der Scherstift der Überlastsicherung 6 und der Mitnehmer 5 schwenkt um sein Lager 4 im Schaltrad 1 aus dem Eingriffsbereich der Schaltklinke 8. Der Mitnehmer 5 fällt in die Aussparung 15 und die Klinkenrolle 13 läuft wirkverbindungslos auf der Rollenbahn 14 des Schaltrades 1 leer mit.

Um jedoch einen derartigen Ausfall im Bereich des oberen Totpunktes "T" der Bindenadel 12 zu verhindern, ist unterhalb des Schaltrades 1 eine mittels Exzenterschrauben einstellbare Führungsbahn 16 angeordnet, auf der eine am Mitnehmer 5 gelagerte Rolle 17 zwangsgeführt wird. Der Abstand der Führungsbahn 16 und ihre Form ist der von der Rolle 17 des in der Ausgangslage befindlichen Mitnehmers 5 beschriebenen Kreisbahn angepaßt. Dadurch wird ein Herausschwenken des Mitnehmers 5 solange unterbunden, bis die Totpunktlage "T" oder ihre unmittelbare Umgebung in jedem Falle vom Nadelgetriebe überwunden ist. Dabei setzt die Rolle 17 des Mitnehmers 5 die auftretenden großen Kräfte auf die Führungsbahn 16 ab.

Eine der Bewegung der Bindeeinrichtung fest zugeordnete, jedoch nachlaufende Rückholeinrichtung wird somit im Havariefall nicht gegen das in Totpunktlage befindliche Nadelgetriebe wirken.

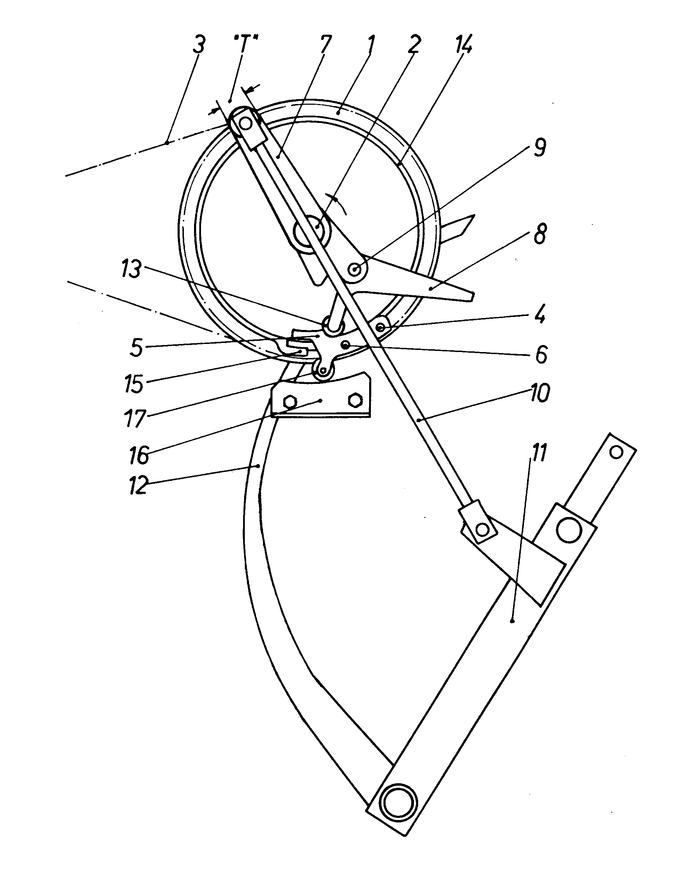

**Patentansprüche**

**1.** Antriebsvorrichtung für die Bindeeinrichtung an Ballenpressen, die ein Stehenbleiben der Nadelschwinge im oberen Totpunkt oder seiner unmittelbaren Nähe verhindert und außerhalb dieses Bereiches den Überlastschutz und die Voraussetzungen für eine sichere Funktion einer Nadelrückholeinrichtung gewährleistet, dadurch gekennzeichnet, daß der Mitnehmer (5) im Schaltrad (1) in einem Lager (4) schwenkbar angeordnet ist und durch eine in oder außerhalb der Schwenkachse angebrachten form- oder kraftschlüssigen Sicherung gegen Überlastung im Eingriffsbereich der Schaltklinke (8) gehalten wird und im Überlastungsfall im oberen Totpunkt "T" der Bindenadeln (12) und seiner unmittelbaren Umgebung der Mitnehmer (5) mit einer Rolle (17) auf einer einstellbaren Führungsbahn (16) im Eingriff mit der Schaltklinke (8) zwangsgeführt wird.

2. Antriebsvorrichtung nach Anspruch 1, dadurch gekennzeichnet, daß die Lage der Führungsbahn (16) in geringem Abstand zur von einer beliebigen Oberfläche des Mitnehmers (5) in der Ausgangslage beschriebenen Kreisbahn zugeordnet ist und die Länge und Kurvenform der Führungsbahn (16) mit dem gewählten Bereich um den oberen Totpunkt "T" der Bindenadeln (12), über den die Zwangsführung der Schaltkurbel (7) erfolgen soll, übereinstimmend ausgeführt ist.

3. Antriebsvorrichtung nach Anspruch 1, dadurch gekennzeichnet, daß die Klinkenrolle (13) der Schaltklinke (8) so breit ausgeführt ist, um im Mitnehmerbereich Mitnehmer (5) und Rollenbahn (14) des Schaltrades (1) zu überdecken und sowohl vom Mitnehmer (5) erfaßt als auch bei ausgeschwenktem Mitnehmer (5) im Mitnehmerbereich von der Rollenbahn (14) des Schaltrades (1) in ihrer Lage gehalten wird.

4. Antriebsvorrichtung nach Anspruch 1, dadurch gekennzeichnet, daß das Schaltrad (1) mit einer, die Schwenkbewegung des Mitnehmers (5) auf das Verlassen des Schaltklinkeneingriffsbereiches begrenzenden Aussparung (15) versehen ist.

**Europäisches Patentamt**

# EUROPÄISCHER RECHERCHENBERICHT

Nummer der Anmeldung

## EP 91 11 4135

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DD-A-226 175 (KOMBINAT FORTSCHRITT LANDMA-SCHINEN, VEB ERNTEMASCHINEN NEUSTADT) <br> * Seite 5, Zeilen 27-31; Abbildungen * <br> – – – | 1 | A 01 F 15/14 <br> A 01 D 59/00 |
| A | DD-A-123 048 (H. PRELLWITZ et al.) <br> * Seite 5, Zeile 9 - Seite 6, Zeile 27; Abbildungen * <br> – – – | 1,2 | |
| A | GB-A-890 982 (G.A. WILLIAMSON) <br> * Seite 2, Zeile 71 - Seite 3, Zeile 60; Abbildungen * <br> – – – – – | 1,2 | |

| RECHERCHIERTE SACHGEBIETE (Int. Cl.5) |
|---|
| A 01 F <br> A 01 D |

Der vorliegende Recherchenbericht wurde für alle Patentansprüche erstellt

| Recherchenort | Abschlußdatum der Recherche | Prüfer |
|---|---|---|
| Berlin | 06 Dezember 91 | MARTIN DEL RIO A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-----------------------------------------------------------------------

& : Mitglied der gleichen Patentfamilie, übereinstimmendes Dokument